# EUROPÄISCHE PATENTANMELDUNG

(11) **EP 4 700 203 A1**
(43) Veröffentlichungstag der Anmeldung: **25.02.2026**
(21) Anmeldenummer: 25190582.4
(22) Anmeldetag: 20.07.2025
(51) Int. Cl.: E06B 3/96, B29C 65/00

(54) **RAHMEN MIT KÄMPFER UND VERFAHREN**

(30) Priorität: 19.08.2024 DE 102024123524
(71) Anmelder: Urban GmbH & Co. KG, 87700 Memmingen (DE)
(72) Erfinder: Jägg, Josef, 87700 Memmingen (DE); Schwörendt, Torsten, 87700 Memmingen (DE)
(74) Vertreter: Patentanwälte Olbricht, Buchhold, Keulertz Partnerschaft mbB

(57) **Zusammenfassung**

Vorgeschlagen wird ein Rahmen (2), umfassend zumindest einen Stab (10) mit einer Sichtseite (S10) und einer Rückseite und einen Kämpfer (20) mit einer Sichtseite (S20) und einer Rückseite (R20), der mit dem Stab (10) verbunden ist, wobei der Stab (10) eine sichtseitige Längskante (11a) und eine V-förmige Kämpferaufnahmeausnehmung (12) mit Verschweißflächen (13) aufweist, wobei der Kämpfer (20) eine sichtseitige Stirnkante (21a) und zwei V-förmig zulaufende Verschweißflächen (23) aufweist, die miteinander eine Kämpferspitze (22) definieren, wobei die sichtseitige Längskante (11a) stumpf an der sichtseitige Stirnkante (21a) anstößt, wobei die stabseitigen Verschweißflächen (13) mit den kämpferseitigen Verschweißflächen (23) verbunden sind.

## Beschreibung

Die Erfindung betrifft einen Rahmen gemäß Anspruch 1 sowie ein Verfahren gemäß Anspruch 8.

Aus der Praxis sind Fensterrahmen und Türrahmen bekannt, die einen Kämpfer aufweisen. Ein Stab, welcher in einem Fensterrahmen/Türrahmen im Einbauzustand typischerweise senkrecht angeordnet ist, wird dabei auch als Kämpfer bezeichnet.

Auch am Kämpfer eines Fensterrahmens schlagen typischerweise Fenster an. Während die meisten Fensterrahmen so ausgebildet sind, dass zwei Fenster in die gleiche Richtung zu öffnen sind, besteht in einigen Ländern eine hohe Verbreitung von Ausführungen, bei welchen die Fenster in unterschiedliche Richtungen zu öffnen sind. Ein Kämpfer für eine solche Ausführung wird auch als Wechselkämpfer bezeichnet. Dort wird eine Kämpferstirnseite an zwei separate Stabteile angelegt, wobei das eine Stabteil seinen Überschlag sichtseitig und das andere Stabteil seinen Überschlag rückseitig aufweist. Dies wird auch als Z-Verschweißung bezeichnet und ist in der EP 3 943 703 A1 gezeigt.

Allerdings ist das Verputzen einer solchen Verbindung aufgrund des Versatzes der beiden verbundenen Stabteile und des Kämpfers nur sehr umständlich oder gar nicht möglich. Ein vollständig stumpfes Einschweißen des Kämpfers führt aufgrund etwaiger Dichtungsnuten ebenfalls zu unzufriedenstellenden Ergebnissen.

Aufgabe der Erfindung ist daher die entsprechende Verbesserung des Stands der Technik.

Erfindungsgemäße Merkmale sind in Anspruch 1 und Anspruch 8 angegeben. Ausgestaltungen sind Gegenstand der Ansprüche 2 bis 7.

Erfindungsgemäß wird ein Rahmen vorgeschlagen, umfassend
- zumindest einen Stab mit einer Sichtseite und einer Rückseite und
- einen Kämpfer mit einer Sichtseite und einer Rückseite, der mit dem Stab verbunden ist,
- wobei der Stab eine sichtseitige Längskante und eine V-förmige Kämpferaufnahmeausnehmung mit Verschweißflächen aufweist,
- wobei der Kämpfer eine sichtseitige Stirnkante und zwei V-förmig zulaufende Verschweißflächen aufweist, die miteinander eine Kämpferspitze definieren,
- wobei die sichtseitige Längskante stumpf an der sichtseitige Stirnkante anstößt,
- wobei die stabseitigen Verschweißflächen mit den kämpferseitigen Verschweißflächen verbunden sind.

Der erfindungsgemäße Rahmen ermöglicht nun, dass der Stab nicht mehr in Stabteile zweigeteilt werden muss, um einen sog. Wechselkämpfer mit Z-Verschweißung zu realisieren. Der Stab ist erfindungsgemäß einstückig ausgebildet. Ferner vereinfacht die Erfindung ein Verputzen der Schweißstellen erheblich und ermöglicht darüber hinaus eine verbesserte Aufnahme einer Dichtung in einer Dichtungsnut.

Auf zumindest der Sichtseite (und ggf. auch auf der Rückseite) des Rahmens stoßen Stab und Kämpfer stumpf aneinander an, wobei wobei die sichtseitige Längskante des Stabes und die sichtseitige Stirnkante des Kämpfers fluchtend auf einer durchgehenden Linie liegen. Zugleich sind Stab und Kämpfer spitz miteinander verschweißt. Der Stumpfstoß überdeckt die Spitzverschweißung bzw. den formpassenden Eingriff der V-förmig zulaufenden Verschweißflächen des Kämpfers in die V-förmige Kämpferaufnahmeausnehmung des Stabes. Die Kombination von sichtseitigem Stumpfstoß und dem formpassenden Eingriff bzw. der Spitzverschweißung ermöglicht zudem, dass eine Dichtungsnut im Stab in eine Dichtungsnut im Kämpfer übergeht.

Der zumindest eine Stab und der Kämpfer können Kunststoffprofilstäbe sein. Das Verschweißen von Stab und Kämpfer kann durch Erwärmen zumindest einer, vorzugsweise aller Verschweißflächen und nachfolgendes gegeneinanderdrücken der Verschweißflächen erfolgen. Die stabseitigen Verschweißflächen können mit den kämpferseitigen Verschweißflächen verschweißt sein. Die stabseitigen Verschweißflächen können mit den kämpferseitigen Verschweißflächen eine Spitzverschweißung ausbilden. Die Verschweißflächen des Kämpfer sind jeweils gegenüber einer Kämpferlängsachse abgeschrägt. Der Winkel, den jede Verschweißfläche mit der Kämpferlängsachse ausbildet, beträgt 45°. Dieser Winkel dient als Spitzenwinkel der sicheren Verschweißung und Realisierung ineinander übergehender Dichtungsnuten. Die Verschweißflächen des Stabs sind um das gleiche Maß gegenüber der Kämpferlängsachse angeschrägt, wie die Verschweißfläche des Kämpfers, mit der sie verschweißt ist/wird.

Der Berührungsbereich beider Verschweißflächen des Kämpfers definiert die Kämpferspitze. Entlang der Längsachse des Kämpfers ist die Stirnkante gegenüber der Kämpferspitze zurückgesetzt. Dadurch kann die Verortung der Stirnkante an den Stab oder dessen Sichtseite und/oder Rückseite angepasst werden. Die Sichtseite und die Rückseite sind entgegengesetzt verortet. Beim Stab werden sie verbunden durch eine Außenseite und eine Innenseite. Beim Kämpfer werden sie verbunden von Längsseiten. Die Längskante und die Stirnkante verlaufen jeweils geradlinig. Stablängsachse und Kämpferlängsachse können rechtwinklig zueinander angeordnet sein. Die Stirnkante kann in Querrichtung des Kämpfers oder rechtwinklig zur Kämpferlängsachse verlaufen. Die V-förmig zulaufende Verschweißflächen des Kämpfers sind an seinem Längsende verortet.

Gemäß einer denkbaren Weiterbildung des Rahmens kann der Stab einen Stabüberschlag aufweisen, der sich entlang der Stablängsachse erstrecken und in eine Stabquerrichtung abragen kann, wobei der Stabüberschlag zu beiden Seiten des Kämpfers entweder an der Sichtseite des Stabs oder der Rückseite des Stabs angeordnet sein kann. An der jeweils anderen Seite des Stabs ist der Stab frei von einem Stabüberschlag. Der Stabüberschlag ist nur an der Sichtseite oder nur an der Rückseite angeordnet. Der Stabüberschlag kann an nur einer seiner Längsseiten (Innenseite und Außenseite) angeordnet sein und/oder in Richtung Kämpfer abragen. Der Stabüberschlag kann an der Innenseite des Stabs angeordnet sein. Ein solcher Stab dient einer T-Verschweißung.

Gemäß einer denkbaren Weiterbildung des Rahmens kann der Stab einstückig sein. Der erfindungsgemäße Rahmen ermöglicht nämlich, dass der Stab nicht mehr in Stabteile zweigeteilt werden muss, wie es bei einem Wechselkämpfer mit Z-Verschweißung zu realisieren ist. Bei der Z-Verschweißung weist der Kämpfer an einer Längskante einen Überschlag auf und an einer diagonal gegenüberliegenden Längskante einen weiteren Überschlag auf. In Längsrichtung betrachtet, beschreibt der Z-Kämpfer daher den Buchstaben "Z".

Gemäß einer denkbaren Weiterbildung des Rahmens kann der Stab zweistückig sein. Dies dient der einfachen Erzeugung der Kämpferaufnahmeausnehmung. Denkbar ist nämlich ein Zweiteilen des Stabs entlang der Stabquerrichtung in zwei Stabteile, danach ein materialentfernendes Einbringen der Kämpferaufnahmeausnehmung in die stirnseitigen Trennstellen der zwei Stabteile, danach ein Fügen der zwei Stabteile an ihren stirnseitigen Trennstellen, beispielsweise mittels Stumpfverschweißen. Das Einbringen kann ein Abschrägen sein, sodass die beiden Schrägen nach dem Fügen eine V-förmige Kämpferaufnahmeausnehmung bilden. Die gefügten Trennstellen können entlang der Stabquerrichtung mit der Kämpferspitze fluchten.

Gemäß einer denkbaren Weiterbildung des Rahmens kann der Kämpfer an seinen beiden Längsseiten jeweils einen Kämpferüberschlag aufweisen. Jeder Kämpferüberschlag kann sich entlang der Kämpferlängsachse erstrecken und in Kämpferquerrichtung abragen. Die Kämpferüberschläge können entweder an der Sichtseite des Kämpfers oder der Rückseite des Kämpfers angeordnet sein. Vorzugsweise stoßen die Kämpferüberschläge an den Stabüberschlag an, vorzugsweise sind die Kämpferüberschläge mit dem Stabüberschlägen verschweißt. Derart verortete Kämpferüberschläge verleihen dem Kämpfer eine T-Form, in Kämpferlängsrichtung betrachtet; sie dienen daher der sog. T-Verschweißung. Bei der T-Verschweißung weist der Kämpfer an einer Längskante einen Überschlag auf und an einer entlang der Sichtseite oder Rückseite benachbarten Längskante einen weiteren Überschlag auf.

Gemäß einer denkbaren Weiterbildung des Rahmens kann der Stabüberschlag eine Dichtungsnut ausbilden. Gemäß einer denkbaren Weiterbildung des Rahmens können die Kämpferüberschläge jeweils eine Dichtungsnut ausbilden. Denkbar ist, dass die Dichtungsnuten des Kämpfers lückenlos in die Dichtungsnut des Stabs übergehen.

Gemäß einer Weiterbildung des Rahmens kann die sichtseitige Stirnkante entlang einer Kämpferlängsachse gegenüber der Kämpferspitze zurückgesetzt sein. Das hat den Vorteil, dass der Kämpfer tief in den Stab einstehen kann. Ferner können dadurch sehr große Verschweißflächen ausgebildet werden. Sofern auch eine rückseitige Stirnkante vorhanden ist, kann diese ebenfalls entlang der Kämpferlängsachse gegenüber der Kämpferspitze zurückgesetzt sein.

Gemäß einer Weiterbildung des Rahmens kann der Kämpfer vermittels seiner V-förmig zulaufenden Verschweißflächen formpassend in die V-förmige Kämpferaufnahmeausnehmung einstehen. Das hat den Vorteil, dass der Kämpfer tief in den Stab einstehen kann. Ferner können dadurch sehr große Verschweißflächen ausgebildet werden.

Gemäß einer Weiterbildung des Rahmens kann der Stab eine rückseitige Längskante und der Kämpfer eine rückseitige Stirnkante aufweisen, die stumpf aneinander anstoßen. Auch auf der Rückseite kann der Rahmen von den Erfindungsvorteilen profitieren. Die Stumpfstöße können sodann auf beiden Rahmenseite parallel zur Längsachse des Stabs verlaufen.

Gemäß einer Weiterbildung des Rahmens können die sichtseitige Längskante und die rückseitige Längskante die V-förmige Kämpferaufnahmeausnehmung zumindest teilweise überdecken. Dadurch ist nicht nur ein ästhetisch ansprechender Rahmen ermöglicht, sondern das Sichtüberdecken der Spitzverschweißung sichergestellt.

Gemäß einer Weiterbildung des Rahmens können die sichtseitige Längskante und die rückseitige Längskante in Stabquerrichtung versetzt zueinander sein. Dadurch können der stirnseitige und der rückseitige Stumpfstoß unabhängig voneinander ausgestaltet werden. Das ist besonders dann von Vorteil, wenn sich die Sichtseite des Stabs von seiner Rückseite geometrisch unterscheidet. Die Längskanten können in Stabquerrichtung unterschiedliche Abstände zur Außenseite des Stabs aufweisen.

Gemäß einer Weiterbildung des Rahmens kann die sichtseitige Längskante und die sichtseitige Stirnkante unverschweißt aneinander anstoßen. Gleiches kann, sofern vorhanden, auch für die rückseitige Längskante und die rückseitige Stirnkante gelten. Dadurch, dass dieser Bereich unverschweißt bleibt, bilden die Kanten keine Stoffschlussverbindung aus. Die Entstehung eines Schweißwulstes ist von vorneherein vermieden, ebenso wie ein erforderliches Verputzen zu dessen Entfernung.

Erfindungsgemäß wird zudem ein Verfahren vorgeschlagen zum Verbinden eines Stabs mit einem Kämpfer, wobei der Stab eine Sichtseite und eine Rückseite aufweist und der Kämpfer eine Sichtseite und eine Rückseite aufweist, umfassend die folgenden Schritte:
- materialentfernendes Einbringen einer sichtseitigen Längskante und einer V-förmigen Kämpferaufnahmeausnehmung mit Verschweißflächen in den Stab,
- materialentfernendes Einbringen einer sichtseitigen Stirnkante und zwei V-förmig zulaufenden Verschweißflächen, die miteinander eine Kämpferspitze definieren, in den Kämpfer,
- Erwärmen der stabseitigen Verschweißflächen und/oder der kämpferseitigen Verschweißflächen,
- Einführen der Kämpferspitze in die Kämpferaufnahmeausnehmung und
- Gegeneinanderdrücken der stabseitigen Verschweißflächen und der kämpferseitigen Verschweißflächen zur stoff- und formschlüssigen Verbindung,
- stumpfes Anstoßen der Längskante und Stirnkante.

Die bereits oben bezüglich des Rahmens beschriebenen Vorteile ergeben sich analog auch für das Verfahren, worauf hiermit verwiesen wird.

Sollten Bauteile mehrfach offenbart sein, sollen Ausgestaltungen und Vorteile, die nur für eines der Bauteile beschrieben sind, gleichsam auch für die anderen entsprechenden Bauteile als in optionaler Weise offenbart gelten.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Draufsicht auf einen Rahmenausschnitt nach Verbindung,
- Fig. 2: eine Draufsicht auf einen Rahmenausschnitt vor Verbindung,
- Fig. 3: eine perspektivische Draufsicht auf den Rahmenausschnitt der Fig. 2, und
- Fig. 4: eine Ansicht auf den Kämpfer der Fig. 1.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen.

Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen.

Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

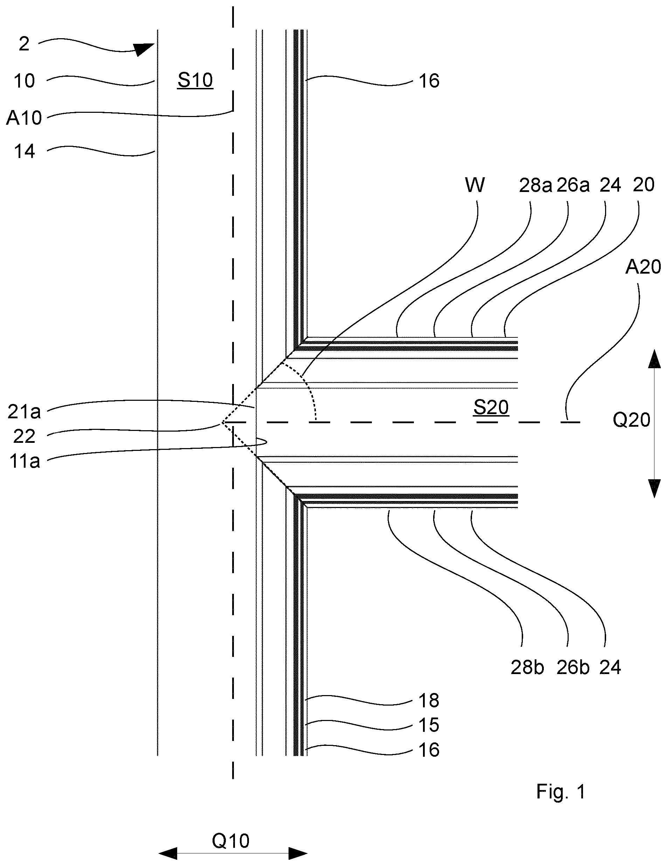

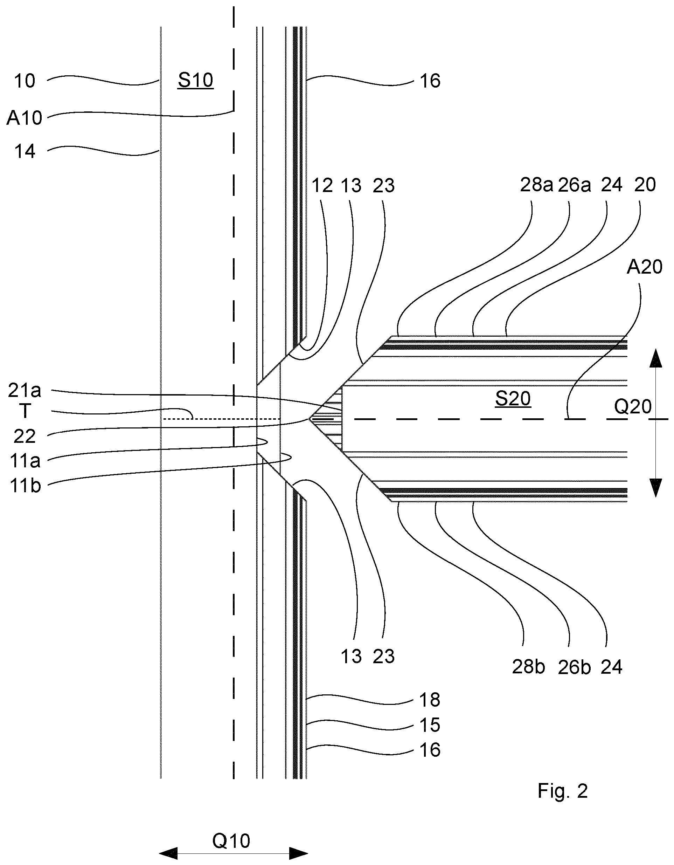

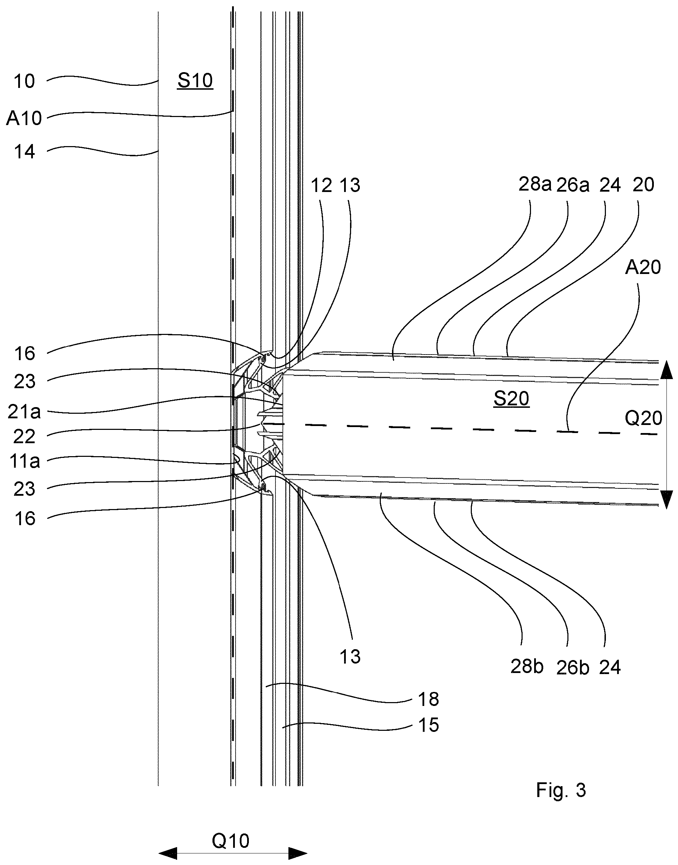

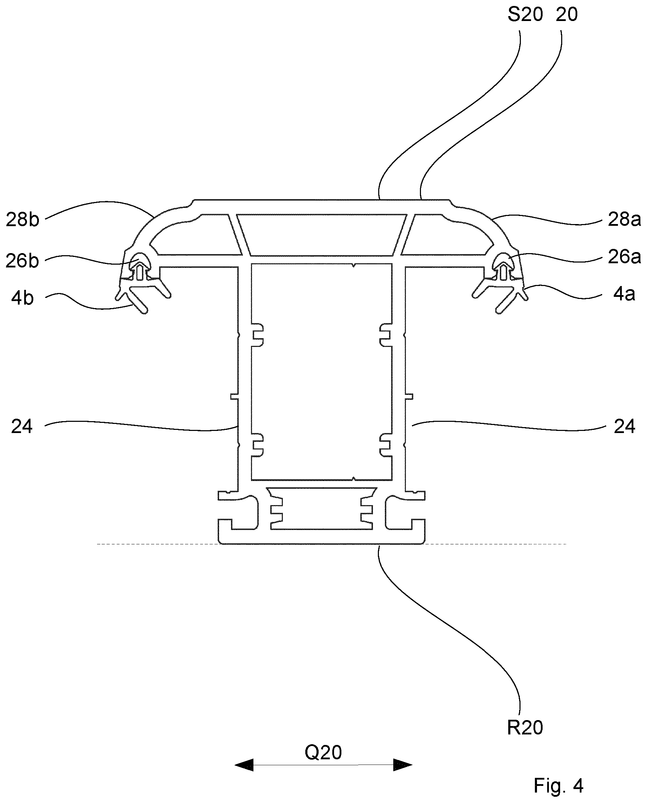

Die **Figur 1** zeigt einen Ausschnitt eines Rahmens 2 mit einem einstückigen Stab 10 und einem Kämpfer 20. Die **Figuren 2** **und** **3** zeigen aus unterschiedlichen Blickwinkeln den Stab 10 und den Kämpfer 20 vor Verschweißung zum Rahmen 2. Die **Figur 4** zeigt den Querschnitt des Kämpfers 20.

Der Stab 10 weist eine Stablängsachse A10, die sich in Längsrichtung des Stabs 10 durch diesen hindurch erstreckt, und eine Stabquerrichtung Q10 auf. Ferner weist der Stab 10 eine Sichtseite S10 und eine Rückseite auf, die auf der der Sichtseite S10 gegenüberliegenden Seite des Stabs 10 verortet ist. Sichtseite S10 und Rückseite sind außenseitig über eine Außenseite 14 und innenseitig über eine Innenseite 15 verbunden.

Der Stab 10 weist zudem einen Stabüberschlag 18 auf, der sich entlang der Stablängsachse A10 erstreckt und in Stabquerrichtung Q10 abragt. Der Stabüberschlag 18 ist zu beiden Seiten des Kämpfers 20 nur an der Sichtseite S10 des Stabs 10 angeordnet und ragt in Richtung Kämpfer 20 ab. Der Stab 10 weist auf seiner Innenseite 15 am Stabüberschlag 18 eine Dichtungsnut 16 auf. Der Stab 10 weist sichtseitig eine geradlinige Längskante 11a, rückseitig eine geradlinige Längskante 11b und auch eine V-förmige Kämpferaufnahmeausnehmung 12 auf. Die Längskanten 11a, 11b überdecken die Kämpferaufnahmeausnehmung 12 teilweise.

Die Kämpferaufnahmeausnehmung 12 bildet Verschweißflächen 13 aus. Der Stab 10 ist in den Figuren 1 bis 4 ein einstückiger Stab 10; lediglich aus Gründen der Illustration zeigt Figur 2 strichliniert eine Trennstelle T eines zweistückigen Stabs. Die Trennstelle T fluchtet entlang der Stabquerrichtung Q10 mit der Kämpferspitze 22.

Die sichtseitige Längskante 11a und die rückseitige Längskante 11b sind in Stabquerrichtung Q10 zueinander versetzt.

Der Kämpfer 20 weist eine Kämpferlängsachse A20, die sich in Längsrichtung des Kämpfers 20 durch diesen hindurch erstreckt, und eine Kämpferquerrichtung Q20 auf. Ferner weist der Kämpfer 20 eine Sichtseite S20 und eine Rückseite R20 auf, die auf der der Sichtseite S20 gegenüberliegenden Seite des Kämpfers 20 verortet ist. Sichtseite S20 und Rückseite R20 sind über Längsseiten 24 verbunden.

Der Kämpfer 20 ist ein T-Kämpfer und weist daher an seinen beiden Längsseiten 24 jeweils einen Kämpferüberschlag 28a, 28b auf, die sich entlang der Kämpferlängsachse A20 erstrecken und in Kämpferquerrichtung Q20 abragen. Beide Kämpferüberschläge 28a, 28b sind nur an der Sichtseite S20 des Kämpfers 20 angeordnet und ragen entlang der Stablängsachse S10 ab.

Der Kämpfer 20 weist auf seinen Längsseiten 24 an jedem Kämpferüberschlag 28a, 28b jeweils eine Dichtungsnut 26a, 26b auf. Aus illustratorischen Gründen ist in Figur 4 gezeigt, dass in die Dichtungsnuten 26a, 26b jeweils eine Dichtung 4a, 4b einsetzbar ist.

Der Kämpfer 20 weist zudem sichtseitig eine geradlinige Stirnkante 21a und rückseitig eine weitere aber nicht dargestellte geradlinige Stirnkante auf. An seinem gezeigten Längsende weist der Kämpfer 20 zwei V-förmig zulaufende Verschweißflächen 23 auf, die miteinander eine Kämpferspitze 22 definieren. Die sichtseitige Stirnkante 21a und auch die rückseitige Stirnkante sind entlang der Kämpferlängsachse A20 gegenüber der Kämpferspitze 22 zurückgesetzt.

Die Längskanten 11a, 11b stoßen stumpf und unverschweißt an der jeweiligen Stirnkante 21a an und die stabseitigen Verschweißflächen 13 sind mit den kämpferseitigen Verschweißflächen 23 stoffschlüssig verbunden - Stab 10 und Kämpfer 20 sind spitz miteinander verschweißt. Die stabseitigen Verschweißflächen 13 und auch die kämpferseitigen Verschweißflächen 23 schließen jeweils mit der Kämpferlängsachse A20 einen Flankenwinkel W von 45° ein.

Die V-förmig zulaufenden Verschweißflächen 23 stehen formpassend in die V-förmige Kämpferaufnahmeausnehmung 12 ein, wie in Fig. 1 strichliniert angedeutet. Die Dichtungsnut 16 des Stabs 10 geht lückenlos in die Dichtungsnuten 26a, 26b des Kämpfers 20 über.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 2: Rahmen
- 4a: Dichtung
- 4b: Dichtung

- 10: Stab
- 11a: Längskante
- 11b: Längskante
- 12: Kämpferaufnahmeausnehmung
- 13: Verschweißfläche
- 14: Außenseite
- 15: Innenseite
- 16: Dichtungsnut
- 18: Stabüberschlag

- 20: Kämpfer
- 21a: Stirnkante
- 22: Kämpferspitze

- 23: Verschweißfläche
- 24: Längsseite
- 26a: Dichtungsnut
- 26b: Dichtungsnut
- 28a: erster Kämpferüberschlag
- 28b: zweiter Kämpferüberschlag

- A10: Stablängsachse
- A20: Kämpferlängsachse
- Q10: Stabquerrichtung
- Q20: Kämpferquerrichtung
- R20: Rückseite
- S10: Sichtseite
- S20: Sichtseite

- T: Trennstelle
- W: Flankenwinkel

## Patentansprüche

1. Rahmen (2), umfassend
▪ zumindest einen Stab (10) mit einer Sichtseite (S10) und einer Rückseite und
▪ einen Kämpfer (20) mit einer Sichtseite (S20) und einer Rückseite (R20), der mit dem Stab (10) verbunden ist,
▪ wobei der Stab (10) eine sichtseitige Längskante (11a) und eine V-förmige Kämpferaufnahmeausnehmung (12) mit Verschweißflächen (13) aufweist,
▪ wobei der Kämpfer (20) eine sichtseitige Stirnkante (21a) und zwei V-förmig zulaufende Verschweißflächen (23) aufweist, die miteinander eine Kämpferspitze (22) definieren,
▪ wobei die sichtseitige Längskante (11a) stumpf an der sichtseitige Stirnkante (21a) anstößt,
▪ wobei die stabseitigen Verschweißflächen (13) mit den kämpferseitigen Verschweißflächen (23) verbunden sind.

2. Rahmen (2) nach Anspruch 1, **dadurch gekennzeichnet, dass** die sichtseitige Stirnkante (21a) entlang einer Kämpferlängsachse (A20) gegenüber der Kämpferspitze (22) zurückgesetzt ist.

3. Rahmen (2) nach einem der voranstehenden Ansprüche, **dadurch gekennzeichnet, dass** der Kämpfer (20) vermittels seiner V-förmig zulaufenden Verschweißflächen (23) formpassend in die V-förmige Kämpferaufnahmeausnehmung (12) einsteht.

4. Rahmen (2) nach einem der voranstehenden Ansprüche, **dadurch gekennzeichnet, dass** der Stab (10) eine rückseitige Längskante (11b) und der Kämpfer (20) eine rückseitige Stirnkante aufweist, die stumpf aneinander anstoßen.

5. Rahmen (2) nach einem der voranstehenden Ansprüche, **dadurch gekennzeichnet, dass** die sichtseitige Längskante (11a) und die rückseitige Längskante (11b) die V-förmige Kämpferaufnahmeausnehmung (12) zumindest teilweise überdecken.

6. Rahmen (2) nach einem der voranstehenden Ansprüche, **dadurch gekennzeichnet, dass** die sichtseitige Längskante (11a) und die rückseitige Längskante (11b) in Stabquerrichtung (Q10) versetzt zueinander sind.

7. Rahmen (2) nach einem der voranstehenden Ansprüche, **dadurch gekennzeichnet, dass** die sichtseitige Längskante (11a) und die sichtseitige Stirnkante (21a) unverschweißt aneinander anstoßen.

8. Verfahren zum Verbinden eines Stabs (10) mit einem Kämpfer (20), wobei der Stab (10) eine Sichtseite (S10) und eine Rückseite aufweist und der Kämpfer (20) eine Sichtseite (S20) und eine Rückseite (R20) aufweist, umfassend die folgenden Schritte:
- materialentfernendes Einbringen einer sichtseitigen Längskante (11a) und einer V-förmigen Kämpferaufnahmeausnehmung (12) mit Verschweißflächen (13) in den Stab (10),
- materialentfernendes Einbringen einer sichtseitigen Stirnkante (21a) und zwei V-förmig zulaufenden Verschweißflächen (23), die miteinander eine Kämpferspitze (22) definieren, in den Kämpfer (20),
- Erwärmen der stabseitigen Verschweißflächen (13) und/oder kämpferseitigen Verschweißflächen (23),
- Einführen der Kämpferspitze (22) in die Kämpferaufnahmeausnehmung (12) und
- Gegeneinanderdrücken der stabseitigen Verschweißflächen (13) und kämpferseitigen Verschweißflächen (23) zur stoffschlüssigen Verbindung,
- stumpfes Anstoßen der Längskante (11a) und Stirnkante (21a).
